# EUROPEAN PATENT APPLICATION

(11) **EP 3 358 446 A1**
(43) Date of publication of application: **08.08.2018**
(21) Application number: 16860125.0
(22) Date of filing: 17.10.2016
(51) Int. Cl.: G06F 3/01, G06F 3/03

(54) **GESTURE SENSING METHOD AND ELECTRONIC DEVICE SUPPORTING SAME**

(30) Priority: 30.10.2015 KR 20150152569
(71) Applicant: Samsung Electronics Co., Ltd., Suwon-si, Gyeonggi-do 16677 (KR)
(72) Inventor: MARCHENKO, Andrii, Brovary Kyiv reg. 07403 (UA); SAVIN, Volodymyr, Kyiv 04209 (UA); TYMCHYSHYN, Vitalij, Ivano-Frankivsk 76024 (UA)
(74) Representative: HGF Limited
(86) International application number: PCT/KR2016/011617
(87) International publication number: WO 2017/073941

(57) **Abstract**

A gesture sensing method of an electronic device, according to various examples of the present invention, can comprise an operation of sensing an object, determining a motion of the object, determining a gesture type corresponding to the motion of the object, activating a sensor for sensing a gesture corresponding to the gesture type according to the determined gesture type, and sensing the gesture through the activated sensor. An electronic device according to any one among various examples of the present invention can comprise: a sensor unit for sensing a an object and a motion of the object through at least one sensor, a camera module for photographing the object and the motion of the object through the at least one sensor, and a control unit configured to sense the object, determine the motion of the object, determine the gesture type corresponding to the motion of the object, activate the sensor for sensing the gesture corresponding to the gesture type according to the determined gesture type, and sense the gesture through the activated sensor. Other examples are possible.

## Description

### [Technical Field]

The present invention relates to a gesture sensing method and an electronic device supporting the same.

### [Background Art]

An electronic device means a device performing a specific function according to a program launched in a home appliances, electronic notebook, portable multimedia player, mobile communication terminal, tablet PC, video/sound device, desktop/laptop computer, and vehicle navigation device. For example, such electronic devices can output a sound or a video by using stored information. As the integrity of an electronic device becomes higher and super high speed/high-capacity communication is wide spread, various functions are launched in the electronic device.

As one of various functions, the electronic device receives through various sensors as an input of the electronic device at least one intentional movement of an external object (e.g., a part of a human body such as a finger, palm, and back of hand or a stylus pen) (hereinafter, "gesture"), and recognizes the movement as an original user intention.

### [Disclosure of Invention]

### [Technical Problem]

As an inputting gesture becomes complicated, an electronic device can maintain all the sensors in an active state in order to detect the gesture. In this case, the electronic device can meet a power consumption problem because of a limited capacity of a battery.

In order to solve the above problem accordingly, various embodiments of the present invention can provide a gesture sensing method and an electronic device supporting the same by detecting a movement of an object and identifying a complexity of the gesture in order to deactivate unnecessary sensors and reduce power consumption.

Further, various embodiments of the present invention can provide a gesture sensing method and an electronic device supporting the same by resetting a sensor in order to detect a gesture according to a movement of an object.

### [Solution to Problem]

According to various embodiments of the present invention, a gesture sensing method of an electronic device may comprise the operations of detecting an object, identifying a movement of the object and determining a gesture type corresponding to the movement of the object, activating a sensor for detecting a gesture corresponding to the gesture type according to the determined gesture type, and detecting the gesture through the activated sensor.

An electronic device according to one of various embodiments of the present invention may be configured with a sensor unit for detecting an object and a movement of the object through at least one sensor; a camera module for photographing the object and the movement of the object through the at least one sensor; and a control unit configured to detect the object, identify the movement of the object, determine the gesture type corresponding to the movement of the object, activate the sensor for detecting the gesture corresponding to the gesture type according to the determined gesture type, and detect the gesture through the activated sensor.

### [Advantageous Effects of Invention]

A gesture sensing method and an electronic device according to various embodiments can deactivate sensors that are not necessary for detecting a gesture and reduce power consumption by identifying an intention of gesture.

Further, according to various embodiments of the present invention, the electronic device can identify a changing gesture intention in operations and activate only the sensors necessary for detecting an intended gesture or reset the sensors to detect the intended gesture. Accordingly, in order to detect a changing gesture through a sensor, electric power required for restarting the electronic device is unnecessary, and power consumption for restarting can be saved.

### [Brief Description of Drawings]

Figure 1 illustrates an electronic device in a network environment according to various embodiments of the present invention.
Figure 2 is a block diagram illustrating an electronic device according to various embodiments of the present invention.
Figure 3 is a block diagram illustrating a program module according to various embodiments of the present invention.
Figures 4a to 4c illustrate examples according to various embodiments of the present invention.
Figure 5 is a flowchart according to various embodiments of the present invention.

### [Mode for the Invention]

Hereinafter, various embodiments of the present disclosure are described with reference to the accompanying drawings. It should be understood that embodiments and terminology used therein are not intended to limit the disclosed technique to particular implementation, but various modifications, equivalents, and/or alternatives of the embodiments are included. In the description of the drawings, like reference numerals may be used for similar elements.

In this disclosure, the terms such as "comprise", "include", and "have" denote the presence of stated elements, components, operations, functions, features, and the like, but do not exclude the presence of or a possibility of addition of one or more other elements, components, operations, functions, features, and the like.

In this disclosure, the expressions "A or B", "at least one of A and/or B", and the like may include all possible combinations of items listed together. For example, "A or B", "at least one of A and B", or "at least one of A or B" may indicate all of (1) including at least one A, (2) including at least one B, and 3) including both of at least one A and at least one B.

The expressions including ordinal numbers, such as "first" and "second," may indicate various elements. The above expressions do not limit the sequence or importance of the elements, and are used merely for the purpose to distinguish one element from the others. For example, a first electronic device and a second electronic device may indicate different electronic devices regardless of the sequence or importance thereof. For example, without departing from the scope of the present disclosure, a first element may be referred to as a second element, and similarly a second element may be also referred to as a first element.

When a certain element (e.g., first element) is referred to as being "connected" or "coupled" (operatively or communicatively) to another element (e.g., second element), it may mean that the first element is connected or coupled directly to the second element or indirectly through any other element (e.g., third element). On the other hand, when a certain element (e.g., first element) is referred to as being "directly connected" or "directly coupled" to another element (e.g., second element), it may be understood that there is no element (e.g., third element) therebetween.

The expression "configured to" may be interchangeably used with any other expressions "suitable for", "having the ability to", "designed to", "adapted to", "made to", "being able to", and "capable of'. The expression "device configured to" may mean that the device, together with other devices or components, "is able to". For example, the phrase "processor configured to perform A, B and C" may mean a dedicated processor (e.g., embedded processor) for performing corresponding operations or a generic-purpose processor (e.g., central processing unit (CPU) or application processor (AP)) capable of performing corresponding operations by executing one or more software programs stored in a memory.

Terms used herein may be merely to describe a certain embodiment, and may not be intended to limit the scope of other embodiments. The singular expressions may include plural expressions unless the context clearly dictates otherwise. Terms used herein, including technical or scientific terms, may have the same meaning as commonly understood by those skilled in the art. Some terms defined in a normal dictionary may be interpreted as having the same or similar meaning as the contextual meanings in the related art. Certain terms are not to be construed as an ideal or overly formal detect unless expressly defined to the contrary herein. In some cases, the terms defined herein cannot be construed to exclude embodiments of the present disclosure.

An electronic device according to various embodiments of this disclosure may include at least one of a smart phone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MP3 player, a portable medical device, a digital camera, or a wearable device. According to various embodiments, the wearable device may include at least one of an accessory-type device (e.g., a watch, a ring, a bracelet, an anklet, a necklace, glasses, a contact lens, or a head-mounted device (HMD), a fabric- or cloth-type device (e.g., electronic cloth), a body-attached type device (e.g., a skin pad or tattoo), or a body-implemented type circuit.

In some embodiments, the electronic device may be home appliance. For example, the home appliance may include at least one of a TV, a digital video disk (DVD) player, audio equipment, a refrigerator, an air conditioner, a vacuum cleaner, an oven, a microwave, a washing machine, an air cleaner, a set-top box, a home automation control panel, a security control panel, a media box (e.g., Samsung HomeSyncTM, Apple TVTM, or Google TVTM), a game console (e.g., XboxTM, PlayStationTM), an electronic dictionary, an electronic key, a camcorder, or an electronic picture frame.

In another embodiment, the electronic device may include at least one of a medical device (e.g., portable medical measuring equipment (e.g., a blood sugar meter, a heart rate meter, a blood pressure meter, a clinical thermometer, etc.), a magnetic resonance angiography (MRA), a magnetic resonance imaging (MRI), a computed tomography (CT), an ultrasonography, etc.), a navigation device, a global navigation satellite system (GNSS), an event data recorder (EDR), a flight data recorder (FDR), a car infotainment device, electronic equipment for ship (e.g., a marine navigation system, a gyrocompass, etc.), avionics, security equipment, a car head unit, an industrial or home robot, a drone, an automated teller machine (ATM), a point of sales (POS), or a device for internet of things (IoT) (e.g., a bulb, a sensor, a sprinkler, a fire alarm, a thermostat, a streetlight, a toaster, athletic equipment, a hot-water tank, a heater, a boiler, etc.).

In a certain embodiment, the electronic device may be include at least one of furniture, a part of a building/construction or car, an electronic board, an electronic signature receiving device, a projector, or various measuring instruments (e.g., a water meter, an electric meter, a gas meter, a wave meter, etc.). In various embodiments, the electronic device may be one of the above-mentioned devices or a combination thereof. The electronic device according to embodiments disclosed herein is not limited to the above-mentioned devices and may include new electronic devices to be launched with the growth of technology.

Hereinafter, referring to the accompanying drawings, an electronic device according to various embodiments is described. In the present disclosure, the term "user" may refer to a person using an electronic device or a device using an electronic device (e.g., an artificial intelligence electronic device).

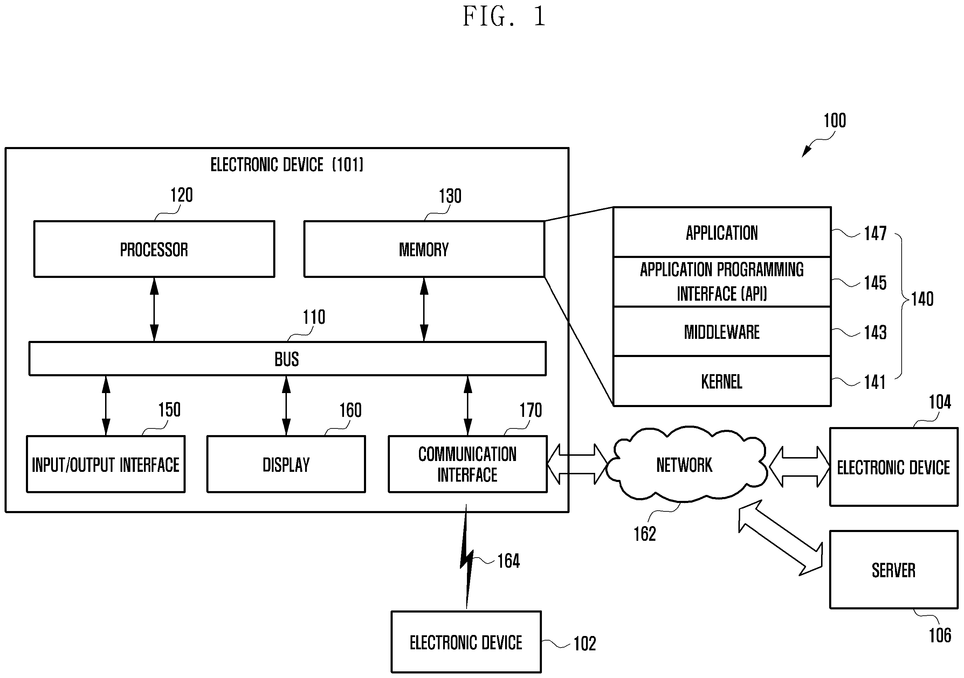

Referring to FIG. 1, illustrated is a network environment 100 according to various embodiments. Referring to Figure A, electronic device 101, 102 or 104 or server 106 may be interconnected via network 162 or near-field communication 164. The electronic device 101 may include a bus 110, a processor 120, a memory 130, an input/output (I/O) interface 150, a display 160, and a communication interface 170. In a certain embodiment, the electronic device 101 may omit at least one of the above elements or further include any other element.

The bus 110 may be a circuit which interconnects the above elements 110 to 170 and delivers a communication (e.g., a control message and/or data) between the above elements.

The processor 120 may include at least one of a central processing unit (CPU), an application processor (AP), or a communication processor (CP). The processor 120 may execute an operation or data processing for control and/or communication of at least one of other elements.

The memory 130 may include volatile and/or non-volatile memory. The memory 130 may store instructions or data related to at least one element of the electronic device 101. According to an embodiment, the memory 130 may store software and/or programs 140. The programs 140 may include, for example, a kernel 141, a middleware 143, an application programming interface (API) 145, and/or an application program (or application) 147. At least some of the kernel 141, the middleware 143, and the API 145 may be referred to as an operating system (OS).

The kernel 141 may control or manage system resources (e.g., the bus 110, the processor 120, the memory 130, etc.) used to execute operations or functions implemented in other programs (e.g., the middleware 143, the API 145, and the application program 147). Also, the kernel 141 may provide an interface capable of accessing individual elements of the electronic device 101 through the middleware 143, the API 145, or the application program 147, and thereby controlling or managing system resources.

The middleware 143 may perform a function of an intermediary so that the API 145 or the application program 147 communicates with the kernel 443- 141 and thereby exchanges data.

In addition, the middleware 143 may process one or more work requests, received from the application program 147, according to priorities. For example, the middleware 143 may assign, to the application program 147, a priority for using system resources (e.g., the bus 110, the processor 120, the memory 130, etc.) of the electronic device 101 and then process the one or more work requests. For example, the middleware 143 may perform the scheduling or load balancing of the one or more task requests by processing the one or more task requests according to the priority assigned to the at least one.

The API 145 is an interface through which the application 147 controls a function provided by the kernel 141 or the middleware 143, and may include, for example, at least one interface or function (e.g., instructions) for file control, window control, image processing, character control, and/or the like.

The I/O interface 150 may transmit commands or data, inputted from a user or other external device, to other element(s) of the electronic device 101, or output commands or data, received from other element(s) of the electronic device 101, to a user or other external device.

The display 160 may include, for example, a liquid crystal display (LCD), a light-emitting diode (LED) display, an organic light-emitting diode (OLED) display, a micro-electro-mechanical systems (MEMS) display, or an electronic paper display. The display 160 may display, for example, various contents (e.g., text, image, video, icon, symbol, etc.) to a user. The display 160 may include a touch screen and may receive, for example, a touch, gesture, proximity, or hovering input using an electronic pen or a portion of the user's body.

The communication interface 170 may establish communication between the electronic device 101 and an external device (e.g., a first external electronic device 102, a second external electronic device 104, or a server 106). For example, the communication interface 170 may be connected to the network 162 via wireless or wired communication and communicate with an external device (e.g., the second external electronic device 104 or the server 106).

The wireless communication is a cellular communication protocol, for example, and may use at least one of long-term evolution (LTE), LTE Advance (LTE-A), code division multiple access (CDMA), wideband CDMA (WCDMA), an universal mobile telecommunications system (UMTS), a wireless broadband (WiBro) and a global system for mobile communications (GSM), for example. Furthermore, the wireless communication may include the short-distance communication 164, for example. The short-distance communication 164 may include at least one of wireless fidelity (WiFi), Bluetooth, near field communication (NFC), magnetic stripe transmission (MST) and global navigation satellite system (GNSS), for example.

The MST may generate a pulse based on transmission data using an electromagnetic signal, and the pulse may generate a magnetic signal. The electronic device 101 may transmit the magnetic signal to a point of sales (POS). The POS may detect the magnetic signal using an MST reader and restore the data by converting the detected magnetic signal into an electric signal.

The GNSS may include at least one of a global positioning system (GPS), a global navigation satellite system (Glonass), a Beidou Navigation Satellite System (hereinafter "Beidou"), Galileo and the European global satellite-based navigation system, for example, based on a use area or bandwidth. Hereinafter, in this document, the "GPS" may be interchangeably used with the "GNSS." The wired communication may include at least one of an universal serial bus (USB), a high definition multimedia interface (HDMI), recommended standard232 (RS-232) and plain old telephone service (POTS), for example. The network 162 may include at least one of telecommunications networks, for example, a computer network (e.g., LAN or WAN), Internet and a telephone network.

Each of the first and second external electronic devices 102 and 104 may be similar to or different from the electronic device 101 in types. According to one embodiment, the server 106 may include one or more groups of servers. According to various embodiments, all or part of operations performed in the electronic device 101 may be performed in another electronic device or multiple electronic devices (e.g., the electronic devices 102 and 104 and the server 106). According to an embodiment, in case of having to perform a certain function or service automatically or on demand, the electronic device 101 may request any other electronic device (e.g., the electronic device 102 or 104 or the server 106) to perform at least part of the function or service rather than or in addition to autonomously performing the function or service. Then, the other electronic device (e.g., the electronic device 102 or 104 or the server 106) may perform the requested function or service and return a result to the electronic device 101. The electronic device 101 may provide the requested function or service by using or further processing the received result. For this, cloud computing technique, distributed computing technique, or client-server computing technique may be utilized for example.

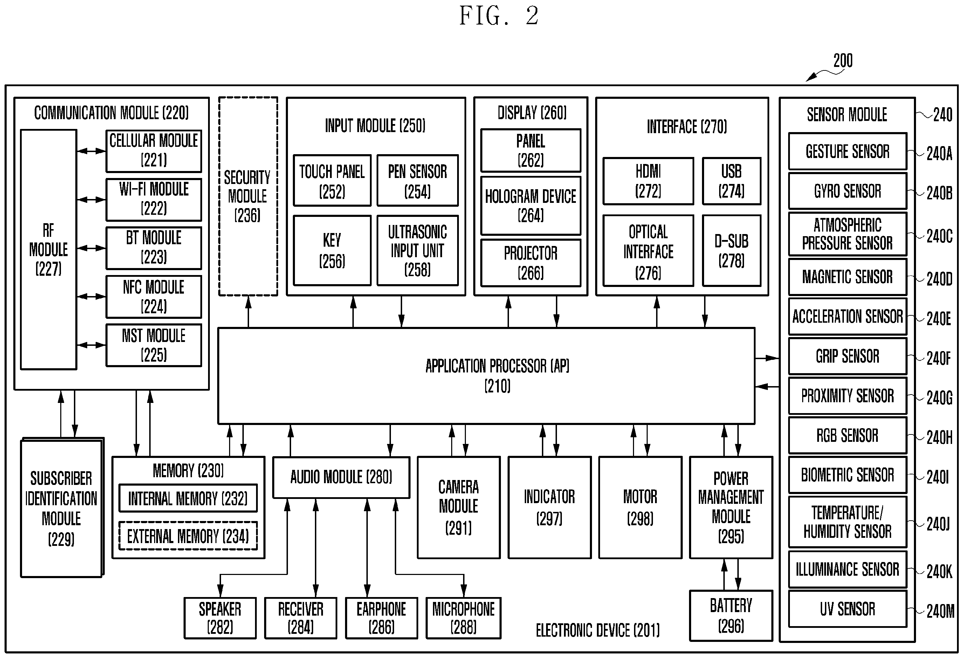

FIG. 2 is a block diagram 200 illustrating an electronic device 201 according to embodiments. The electronic device 201 may include, for example, the whole or part of the electronic device 101 shown in FIG. 1. The electronic device 201 may include at least one application processor (AP) 210, a communication module 220, a subscriber identification module, a memory 230, a sensor module 240, an input device 250, a display 260, an interface 270, an audio module 280, a camera module 291, a power management module 295, a battery 296, an indicator 297, and a motor 298. The processor 210 may execute an operating system (OS) or an application program, control multiple hardware or software components connected to the processor 210, and perform processing and operations on various data. The processor 210 may be implemented by, for example, a system on chip (SoC). According to an embodiment, the processor 210 may further include a graphic processing unit (GPU) and/or an image signal processor. The processor 210 may include at least some of elements shown in FIG. 2 (e.g., a cellular module 221). The processor 210 may load and process instructions or data received from at least one of the other elements (e.g., non-volatile memory) into volatile memory and then store the resulting data in non-volatile memory.

The communication module 220 may include the same or similar configurations as the communication interface 170 shown in FIG. 1. For example, the communication module 220 is capable of including the cellular module 221, a Wi-Fi module 222, a Bluetooth (BT) module 223, a GNSS module 224 (e.g., a GPS module, Glonass module, Beidou module, or Galileo module), an NFC module 225, MST module 226, and a radio frequency (RF) module 227.

The cellular module 221 may provide a voice call, a video call, a messaging service, or an Internet service, for example, through a communication network. According to an embodiment, the cellular module 221 may utilize the subscriber identity module (e.g., a SIM card) 229 to perform the identification and authentication of the electronic device 201 in the communication network. According to an embodiment, the cellular module 221 may perform at least some of functions that the processor 210 may provide. According to an embodiment, the cellular module 221 may include a communications processor (CP).

Each of the WiFi module 222, the Bluetooth module 223, the GNSS module 224, the NFC module 225, and the MST module 226 may include a processor for processing data transmitted or received therethrough. According to a certain embodiment, at least some (e.g., two or more) of the cellular module 221, the WiFi module 222, the Bluetooth module 223, the GNSS module 224, the NFC module 225, or the MST module 226 may be included in an integrated chip (IC) or an IC package.

The RF module 227 may, for example, transmit and receive communication signals (e.g., RF signals). The RF module 227 may include, for example, a transceiver, a power amplifier module (PAM), a frequency filter, a low noise amplifier (LNA), or an antenna. According to another embodiment, at least one of the cellular module 221, the WiFi module 222, the Bluetooth module 223, the GNSS module 224, the NFC module 225, or the MST module 226 may transmit and receive RF signals through separate RF modules.

The subscriber identity module 229 may include, for example, a card having subscriber identify module and/or an embedded SIM, and may include unique identification information (e.g., an integrated circuit card identifier (ICCID), or an international mobile subscriber identity (IMSI)).

The memory 230 (e.g., the memory 130) may include an internal memory 232 and an external memory 234. The internal memory 232 may include, for example, at least one of a volatile memory (e.g., a DRAM, an SRAM, or SDRAM), and a non-volatile memory (e.g., a one time programmable ROM (OTPROM), a PROM, an EPROM, an EEPROM, a mask ROM, a flash ROM, a flash memory, a hard drive, or a solid state drive (SSD)).

The external memory 234 may include a flash drive, for example, a compact flash (CF), a secure digital (SD), a micro-SD, a mini-SD, an extreme Digital (xD), or a memory stick. The external memory 234 may be functionally or physically connected to the electronic device 201 through various interfaces.

security module 236 is a module including a storage space having a relatively higher security level than the memory 230, and may be a circuit for securing a safe data storage and a protected execution environment. The security module 236 can be configured with a separate circuit, and may include a separate processor. For example, the security module 236 may be installed in a detachable smart chip or a secure digital (SD) card, or may include an embedded secure element (eSE) installed in a fixed chip of the electronic device 201. Further, the security module 236 can be driven by an operating system different from the operating system (OS) of the electronic device 201. For example, the security module 236 can operate based on a JCOP (Java Card Open Platform) operating system.

For example, the sensor module 240 can measure a physical quantity or detect an operating state of the electronic device 201, and convert the measured or detected information to an electric signal. The sensor module 240 may include, for example, at least one of a gesture sensor 240A, gyro sensor 240B, barometric pressure sensor 240C, magnetic sensor 240D, acceleration sensor 240E, grip sensor 240F, proximity sensor 240G, color sensor 240H (e.g., RGB (red, green, blue) sensor), biometric sensor 2401, temperature/humidity sensor 240J, illumination sensor 240K, or UV (ultraviolet) sensor 240M. Additionally or alternatively, the sensor module 240 may include, for example, E-nose sensor, EMG sensor (electromyography sensor), EEG sensor (electroencephalogram sensor), ECG sensor (electrocardiogram sensor), IR (infrared) sensor, iris sensor and/or fingerprint sensor, and depth sensor. The sensor module 240 may further include a control circuit for controlling at least one sensor belonging to the sensor module 240. According to an embodiment, the electronic device 201 may include a processor configured to control the sensor module 240 as a part of the processor 210 or separately, and can control the sensor module 240 while the processor 210 is in a sleep state.

The input device 250 may include, for example, a touch panel 252, digital pen sensor 254, key 256, or ultrasonic input device 258. The touch panel 252 may use, for example, at least one of electrostatic type, pressure sensitive type, infrared type, or ultrasonic type. Further, the touch panel 252 may include a control circuit. The touch panel 252 may further include a tactile layer in order to provide a tactile response for a user.

For example, the digital pen sensor 254 may be a part of the touch panel or include a separate recognition sheet. The key 256 may include, for example, a physical button, optical key, or keypad. The ultrasonic input device 258 can detect ultrasonic waves generated by an input tool through a microphone 288, and identify data corresponding to the detected ultrasonic waves.

The display 260 (e.g., display 160) may include a panel 262, hologram device 264, or projector 266. The panel 262 may be identical or similar to the display 160 of Figure 1. The panel 262 may be configured, for example, in a flexible, transparent, or wearable form. The panel 262 may be configured with a touch panel 252 and a module. The hologram device 264 can show a 3-dimensional image in the air by using light interference. The projector 266 can display an image by projecting light on a screen. The screen may be located, for example, inside or outside the electronic device 201. According to an embodiment, the display 260 may further include a control circuit for controlling the panel 262, hologram device 264, or projector 266.

The interface 270 may include, for example, a HDMI (High-definition Multimedia Interface) 272, USB (Universal Serial Bus) 274, optical interface 276, or D-sub (D-subminiature) 278. The interface 270 may include, for example, the communication interface 170 shown in Figure 1. Additionally or alternatively, the interface 270 may include, for example, an MHL (Mobile High-definition Link) interface, SD (Secure Digital) card interface, MMC (Multi-Media Card) interface, or IrDA (Infrared Data Association) specification interface.

The audio module 280 can convert, for example, a sound and an electric signal bidirectionally. At least one component of the audio module 280 may include, for example, the input/output interface 145 shown in Figure 1. The audio module 280 can process sound information input or output, for example, through a speaker 282, receiver 284, earphone 286, or microphone 288.

The camera module 291 is a device for photographing a still image or a moving image and, according to an embodiment, may include at least one image sensor (e.g., front sensor or rear sensor), lens, ISP (Image Signal Processor), or flash light (e.g., LED or xenon lamp). Additionally, the camera module 291 can obtain depth data by using a depth sensor and an IR sensor. Further, the camera module can obtain depth data by using a TOF (Time Of Flight) method. The TOF method is a technique of emitting an IR signal to an object to be measured through an emitter of an IR sensor, measuring a reflection time, and obtaining depth information in real time. Additionally, the electronic device may include a separate depth camera module having a depth sensor.

The power management module 295 may manage electric power of the electronic device 201. Although not shown, the power management module 295 may include, for example, a PMIC (Power Management Integrated Circuit), a charger IC, or a battery or fuel gauge. The PMIC may be formed, for example, of an IC chip or SoC. Charging may be performed in a wired or wireless manner. The charger IC may charge a battery 296 and prevent overvoltage or overcurrent from a charger. According to an embodiment, the charger IC may have a charger IC used for at least one of wired and wireless charging types. A wireless charging type may include, for example, a magnetic resonance type, a magnetic induction type, or an electromagnetic type. Any additional circuit for a wireless charging may be further used such as a coil loop, a resonance circuit, or a rectifier. The battery gauge may measure the residual amount of the battery 296 and a voltage, current or temperature in a charging process. The battery 296 may store or create electric power therein and supply electric power to the electronic device 201. The battery 296 may be, for example, a rechargeable battery or a solar battery.

The indicator 297 may show thereon a current status (e.g., a booting status, a message status, or a recharging status) of the electronic device 201 or of its part (e.g., the AP 210). The motor 298 may convert an electric signal into a mechanical vibration. Although not shown, the electronic device 201 may include a specific processor (e.g., GPU) for supporting a mobile TV. This processor may process media data that comply with standards of DMB (Digital Multimedia Broadcasting), DVB (Digital Video Broadcasting), or media flow.

Each of the above-discussed elements of the electronic device disclosed herein may be formed of one or more components, and its name may be varied according to the type of the electronic device. The electronic device disclosed herein may be formed of at least one of the above-discussed elements without some elements or with additional other elements. Some of the elements may be integrated into a single entity that still performs the same functions as those of such elements before integrated.

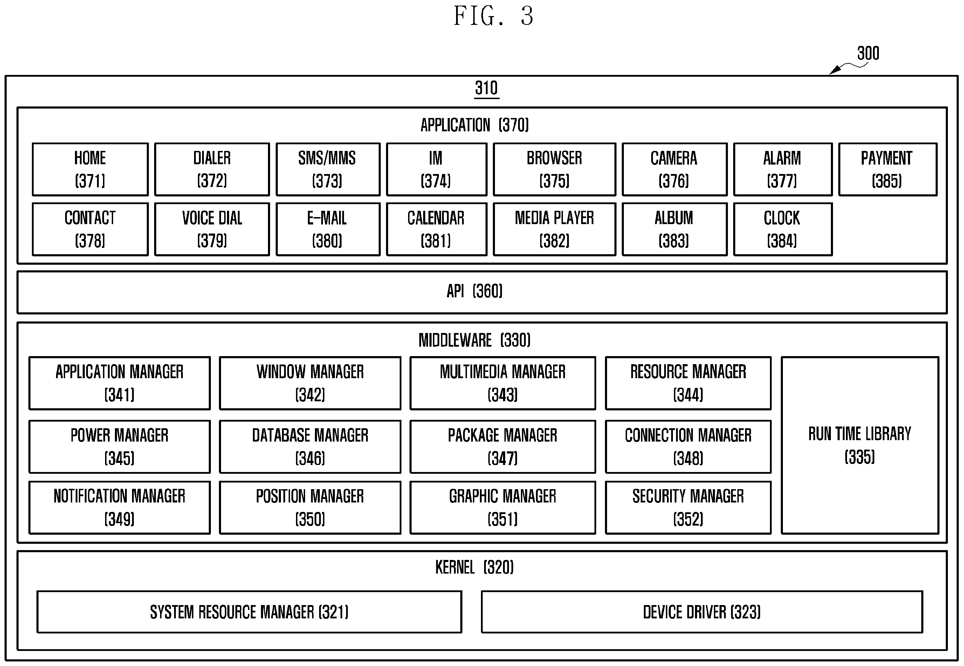

FIG. 3 is a block diagram illustrating a program module according to various embodiments. According to one embodiment, the program module 310 (e.g., the program 140) may include an OS controlling resources related to an electronic device (e.g., the electronic device 101) and/or various applications (e.g., the application program 147) executed in the OS. For example, the OS may be AndroidTM, iOSTM, WindowsTM, SymbianTM, TizenTM, BadaTM, and the like.

The program module 310 may include a kernel 320 (e.g., the kernel 141), a middleware 330 (e.g., the middleware 143), an API 360 (e.g., the API 145), and/or the application 370 (e.g., the application program 147). At least a part of the program module 310 may be preloaded in the electronic device or downloaded from an external electronic device (e.g., the electronic device 102, 104 or the server 106).

The kernel 320 may include a system resource manager 321 and/or a device driver 323. The system resource manager 321 may perform the control, allocation, recovery, and/or the like of system resources. According to one embodiment, the system resource manager 321 may include a process manager, a memory manager, or a file system manager. The device driver 323 may include, for example, a display driver, a camera driver, a Bluetooth driver, a shared memory driver, a USB driver, a keypad driver, a Wi-Fi driver, an audio driver, or an Inter-Process Communication (IPC) driver.

The middleware 330 may include multiple modules previously implemented so as to provide a function used in common by the applications 370. Also, the middleware 330 may provide a function to the applications 370 through the API 360 in order to enable the applications 370 to efficiently use limited system resources within the electronic device. For example, as illustrated in FIG. 3, the middleware 330 (e.g., the middleware 143) may include at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, a security manager 352, and any other suitable and/or similar manager.

The runtime library 335 may include, for example, a library module used by a complier, in order to add a new function by using a programming language during the execution of the application 370. According to an embodiment of the present disclosure, the runtime library 335 may perform functions which are related to input and output, the management of a memory, an arithmetic function, and/or the like.

The application manager 341 may manage, for example, a life cycle of at least one of the applications 370. The window manager 342 may manage GUI resources used on the screen. For example, when at least two displays 260 are connected, the screen may be differently configured or managed in response to the ratio of the screen or the action of the application 370. The multimedia manager 343 may detect a format used to reproduce various media files and may encode or decode a media file through a codec appropriate for the relevant format. The resource manager 344 may manage resources, such as a source code, a memory, a storage space, and/or the like of at least one of the applications 370.

The power manager 345 may operate together with a Basic Input/Output System (BIOS), may manage a battery or power, and may provide power information and the like used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity such as, for example, Wi-Fi and Bluetooth. The notification manager 349 may display or report, to the user, an event such as an arrival message, an appointment, a proximity alarm, and the like in such a manner as not to disturb the user. The location manager 350 may manage location information of the electronic device. The graphic manager 351 may manage a graphic effect, which is to be provided to the user, and/or a user interface related to the graphic effect. The security manager 352 may provide various security functions used for system security, user authentication, and the like. According to an embodiment, when the electronic device (e.g., the electronic device 101) has a telephone function, the middleware 330 may further include a telephony manager for managing a voice telephony call function and/or a video telephony call function of the electronic device.

The middleware 330 may include a middleware module for forming various functional combinations of the above-described elements. The middleware 330 may provide modules specialized according to types of OSs in order to provide differentiated functions. Also, the middleware 330 may dynamically delete some of the existing elements, or may add new elements.

The API 360 (e.g., the API 145) is a set of API programming functions, and may be provided with a different configuration according to an OS. In the case of Android or iOS, for example, one API set may be provided to each platform. In the case of Tizen, for example, two or more API sets may be provided to each platform.

The applications 370 (e.g., the applications 147) may include, for example, a home application 371, a dialer application 372, a Short Message Service (SMS)/Multimedia Message Service (MMS) application 373, an Instant Message (IM) application 374, a browser application 375, a camera application 376, an alarm application 377, a contact application 378, a voice dial application 379, an electronic mail (e-mail) application 380, a calendar application 381, a media player application 382, an album application 383, a clock application 384, or at least one application capable of performing functions such as health care (e.g., measurement of exercise amount or blood glucose) or environmental information provision (e.g., providing information about air pressure, humidity, temperature, or the like).

According to one embodiment, the applications 370 may include an application (hereinafter, referred to as "information exchange application") that supports the exchange of information between the electronic device (e.g., 101) and an external electronic device (e.g., 102 or 104). The information exchange application may include, for example, a notification relay application for delivering specific information to the external electronic device, or a device management application for managing the external electronic device.

For example, the notification relay application may have a function of sending notification information generated in other applications (e.g., the SMS/MMS application, the email application, the healthcare application, or the environmental information application) of the electronic device to the external electronic device (e.g., 102 or 104). Further, the notification relay application may receive notification information from the external electronic device and provide it to the user.

The device management application may manage (e.g., install, delete, or update) at least one function (e.g., turn-on/turn-off of the external electronic device itself or some components thereof or adjusting the brightness or resolution of the display) of the external electronic device (e.g., 102 or 104), at least one application running in the external electronic device, or at least one service (e.g., a call service or a message service) provided in the external electronic device.

According to one embodiment, the applications 370 may include an application (e.g., a healthcare application of a mobile medical device, etc.) designated depending on the attributes of the external electronic device (e.g., 102 or 104). According to one embodiment, the applications 370 may include an application received from the external electronic device (e.g., the server 106 or the electronic device 102 or 104). According to one embodiment, the applications 370 may include a preloaded application or a third party application downloadable from a server. The names of elements of the program module 310 according to the illustrated embodiment may be varied depending on the type of the operating system.

According to various embodiments, at least a part of the program module 310 may be implemented in software, firmware, hardware, or a combination thereof. At least a part of the program module 310 may be implemented (e.g., executed) by, for example, a processor (e.g., 210). At least a part of the program module 310 may include, for example, modules, programs, routines, sets of instructions, or processes to perform one or more functions.

The term "module" used in this disclosure may mean a unit including, for example, one or a combination of hardware, software, and firmware. The term "module" may be interchangeably used with other terms, for example, such as unit, logic, logical block, component, or circuit. The "module" may be the minimum unit, or a part thereof, of an integrally constructed component. The "module" may be the minimum unit, or a part thereof, for performing one or more functions. The "module" may be implemented mechanically or electronically. For example, according to the present disclosure, the "module" may include at least one of an application-specific integrated circuit (ASIC) chip, field-programmable gate arrays (FPGAs), and a programmable-logic device, which are known or to be developed later and perform particular functions.

According to various embodiments, at least a part of the device (e.g., modules or functions thereof) or the method (e.g., operations) may be implemented, for example, as instructions stored in a non-transitory computer-readable storage medium in a programming module form. When the instructions are executed by a processor (e.g., the processor 120), the processor may execute a function corresponding to the instructions. The computer-readable storage medium may be, for example, the memory 130.

The non-transitory computer-readable recording medium may include magnetic media such as a hard disk, a floppy disk, and a magnetic tape, optical media such as a Compact Disc Read Only Memory (CD-ROM) and a Digital Versatile Disc (DVD), magnetooptical media such as a floptical disk, and hardware devices specially configured to store and perform a program instruction. In addition, the program instructions may include high class language codes, which can be executed in a computer by using an interpreter, as well as machine codes made by a compiler. The hardware devices described above may be configured to operate as one or more software modules to perform the operations of the various embodiments, and vice versa.

A module or programming module according to various embodiments may include or exclude at least one of the above-discussed components or further include any other component. The operations performed by the module, programming module, or any other component according to various embodiments may be executed sequentially, in parallel, repeatedly, or by a heuristic method. Additionally, some operations may be executed in different orders or omitted, or any other operation may be added.

According to various embodiments of the present invention, a gesture sensing method of an electronic device may comprise the operations of detecting an object, identifying a movement of the object and determining a gesture type corresponding to the movement of the object, activating a sensor for detecting a gesture corresponding to the gesture type according to the determined gesture type, and detecting the gesture through the activated sensor.

According to various embodiments of the present invention, the operation of identifying a movement may comprise an operation of determining whether the gesture type corresponding to the movement of the object is a simple gesture type or a complex gesture type.

According to various embodiments of the present invention, the operation of identifying a movement may comprise the operations of receiving at least one image corresponding to the movement of the object, comparing the at least one received image with a pre-stored reference image, and determining the movement of the object as a simple gesture type if one of the reference images is identified as corresponding to an image corresponding to the simple gesture according to the result of comparing.

According to various embodiments of the present invention, the method may further comprise an operation of determining the movement of the object as a complex gesture type, if one of the reference images corresponds to the complex gesture type.

According to various embodiments of the present invention, the operation of activating a sensor may comprise an operation of resetting a pre-activated sensor for detecting the gesture.

According to various embodiments of the present invention, the operation of detecting the object may comprise detecting the object in a default mode. The default mode may be a mode for activating an RGB sensor, and deactivating an infrared (IR) sensor and a depth sensor.

According to various embodiments of the present invention, the operation of determining the movement of the object may comprise the steps of switching from the default mode to an extended mode according to detection of the object, and determining a gesture type corresponding to the object in the extended mode.

According to various embodiments of the present invention, the extended mode may be a mode for activating the RGB sensor, the IR sensor, and the depth sensor, or a mode for deactivating the RGB sensor, and activating the IR sensor and the depth sensor.

According to various embodiments of the present invention, the extended mode can set the IR sensor and the depth sensor with a frame rate for identifying a gesture type corresponding to the movement of the object.

According to various embodiments of the present invention, the extended mode can be maintained and a sensor for detecting a simple gesture corresponding to the simple gesture can be activated in the case of a simple gesture type according to the result of determining, and the extended mode can be switched to a full performance mode and a sensor for detecting a complex gesture corresponding to the gesture type can be activated in the full performance mode in the case of a complex gesture type according to the result of determining.

According to various embodiments of the present invention, the extended mode can set the IR sensor and the depth sensor with a frame rate for detecting the simple gesture in the case of a simple gesture type according to the result of determining.

According to various embodiments of the present invention, the full performance mode can set the IR sensor and the depth sensor with a frame rate for detecting the complex gesture.

According to various embodiments of the present invention, the full performance mode can set the IR sensor and the depth sensor with a maximum frame rate.

In the present invention, a mode performed by the electronic device can change according to user's gesture intention. A default mode as one of the modes performed by the electronic device may mean a state that a color camera using an RGB sensor is activated and a depth camera is deactivated by deactivating a depth sensor or an IR sensor. The default mode may be a mode that the minimum number of sensors are activated to detect an object performing a gesture. In the default mode, the electronic device can reduce unnecessary power consumption by using minimally only the sensors required.

An extended mode as one of the modes performed by the electronic device may be a mode changed from the default mode according to the detection of an object. The extended mode may be a mode for identifying a gesture type by detecting a gesture intention according to a movement of the object. The electronic device operating in the extended mode may use a preliminary estimation algorithm in order to identify a gesture type intended by the movement of the object. According to the preliminary estimation algorithm, the electronic device can compare at least one received image corresponding to a moving object with a pre-stored image and, according to the comparison result, identify whether the gesture type is a simple gesture type or a complex gesture type. The preliminary estimation algorithm is used as an embodiment, and other algorithms can be used according to an object and/or a sensor detecting the object.

In order to receive at least one image of a moving object by applying the preliminary estimation algorithm, an RGB sensor and a depth sensor can be activated in the extended mode. The depth sensor may be set to operate with 5 fps (frame per second). According to the activation of the RGB sensor, a color camera becomes active, and a depth camera using a depth sensor can also be activated. Further, in the extended mode, the color camera can be deactivated and only the depth camera can be activated.

A full performance mode as one of the modes performed by the electronic device may be a mode changed from the extended mode, if the gesture intended by the movement of object in the extended mode is identified as a complex gesture type. The full performance mode may be a mode that sensors required for detecting the complex gesture are set. For example, in order to detect the complex gesture, the depth sensor can be set to operate with a frame rate of a high value and the IR sensor can be set to emit an IR light having a high illumination value. As an embodiment, the maximum frame rate can be 30 fps. Further, in the full performance mode, the color camera can be deactivated and only the depth camera can be set to operate.

In the present invention, a simple gesture is a gesture included in the simple gesture type. The simple gesture may mean a gesture detected with a lower amount of computing. As an example of a simple gesture, if the object is a user's hand, a gesture of shaking the hand right and left may correspond to the simple gesture. The simple gesture can be detected only with the RGB sensor, or detected with a depth camera configured with an IR sensor and/or a depth sensor operating with a frame rate of a low value.

In the present invention, a complex gesture is a gesture included in the complex gesture type. The complex gesture may mean a gesture detected with a greater amount of computing. As an example of a complex gesture, if the object is a user's hand, a gesture of bending a specific finger or pinching with specific fingers may correspond to the complex gesture. It may be difficult to detect the complex gesture only with the RGB sensor and may require skeletonization processing. Skeletonization processing is one of the methods for extracting a size and an outline from images being received. Accordingly, the complex gesture can be detected not only by the RGB sensor but also by a depth camera configured with an IR sensor and/or a depth sensor operating with a frame rate of a high value.

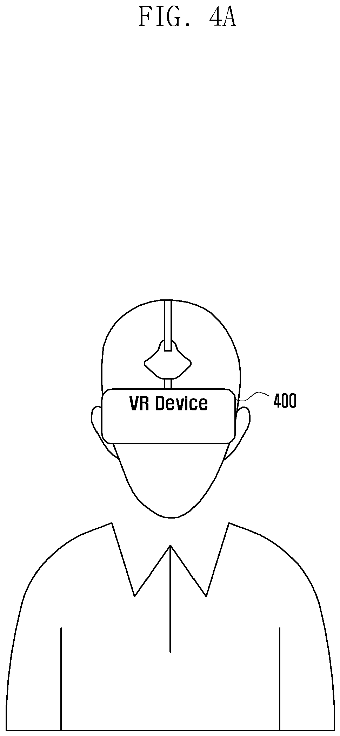

Figures 4a to 4c illustrate examples according to various embodiments of the present invention.

As an embodiment, Figures 4a to 4c illustrate an electronic device 400 in an eye glasses type launched with a VR (Virtual Reality) function as an example of an electronic device. With reference to Figure 4a, a user may wear the electronic device 400. The electronic device 400 may operate in a default mode. The default mode may be a state in which a minimum number of sensors are activated in order to detect an object and, here, the minimum number of sensors may be an RGB sensor as an embodiment.

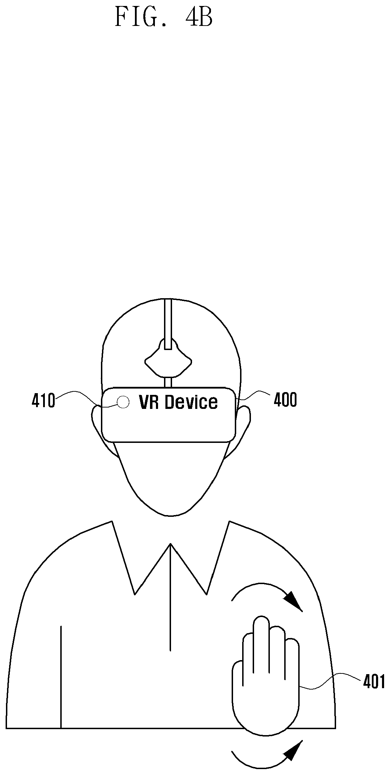

As shown in Figure 4b, the electronic device 400 can detect an object. According to the detection of the object, the electronic device 400 can switch an operating mode from a default mode to an extended mode. The extended mode may be a mode in which a sensor required for detecting a movement of the object is activated. The extended mode may be a state in which a color camera is activated and a depth camera is activated by activating a depth sensor and/or an emitter of an IR sensor. The extended mode can set the activated depth sensor and/or the IR emitter with a minimum frame rate to detect the object. As an embodiment, the minimum frame rate may be 5 fps requiring minimum power consumption. The rate of 5 fps is not a fixed value, and may differ according to a user setting. By switching to the extended mode, the electronic device 400 can display a state notification 410 additionally to notify a switching to the extended mode.

The electronic device operating in the extended mode can detect a movement of an object with at least one of the color camera and the depth camera, and identify whether the gesture type intended by the movement of object is a simple gesture type or a complex gesture type.

The following operation can be performed in order that the electronic device can identify whether the gesture type intended by the movement of an object is a simple gesture type or a complex gesture type. In the extended mode, the electronic device can compare at least one image received from at least one of the color camera and the depth camera with an image pre-stored in the electronic device. If the at least one received image corresponds to a simple image among the images pre-stored in the electronic device, the electronic device can identify that the gesture type intended by the movement of the object is a simple gesture type.

Further, if the at least one received image corresponds to a complex image among the images pre-stored in the electronic device, the electronic device can determine that the gesture type intended by the movement of the object is a complex gesture type,.

As shown in Figure 4b, the electronic device can detect a shape of a hand as an object, and switch an operating mode from a default mode to an extended mode according to the detection of an object.

The electronic device operating in the extended mode can identify that at least one image of a hand shape received from at least one of the color camera and the depth camera corresponds to an image of a pre-stored simple gesture. Namely, the electronic device can identify that the movement of the object is intended as a simple gesture type. The electronic device can detect a simple gesture 401 in the extended mode without switching the mode. The electronic device operating in the extended mode can detect the simple gesture 401 from a user and perform an operation according to the detected simple gesture 401.

As an embodiment, the simple gesture 401 includes a pointing gesture and a grab gesture. The grab gesture may require a higher frame rate than the pointing gesture. Accordingly, even though the simple gesture 401 is detected in the identical extended mode, it may be more effective to detect the grab gesture by setting a higher frame rate than the pointing gesture. Accordingly, the electronic device may have various sensor setting values in order to detect various simple gestures.

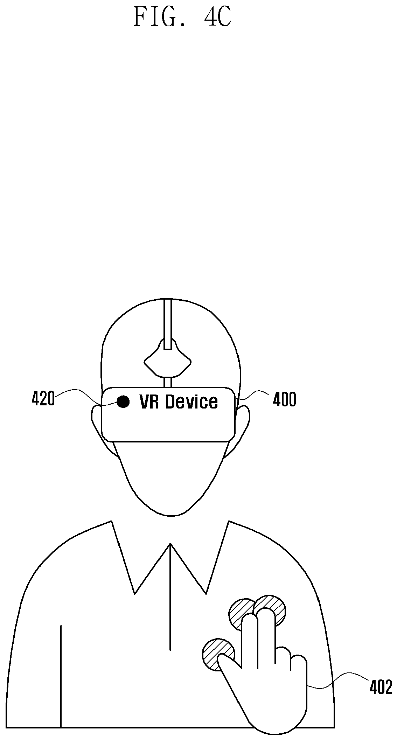

As shown in Figure 4c, the electronic device operating in the extended mode can identify that at least one image of a hand shape received from at least one of the color camera and the depth camera corresponds to an image corresponding to a pre-stored complex gesture. Namely, the electronic device can identify that a movement of the object is intended as a complex gesture type. The electronic device can switch from the extended mode to a full performance mode in order to detect a complex gesture 402. According to switching to the full performance mode, the electronic device 400 can display a state notification additionally for notifying the switching to the full performance mode.

In order to detect a user's complex gesture 402, the full performance mode may be a mode of setting the depth sensor with the highest frame rate value and the IR sensor to emit an IR light with the highest illumination value. The electronic device performing the full performance mode can detect the complex gesture 402, and perform an operation corresponding to the detected complex gesture 402.

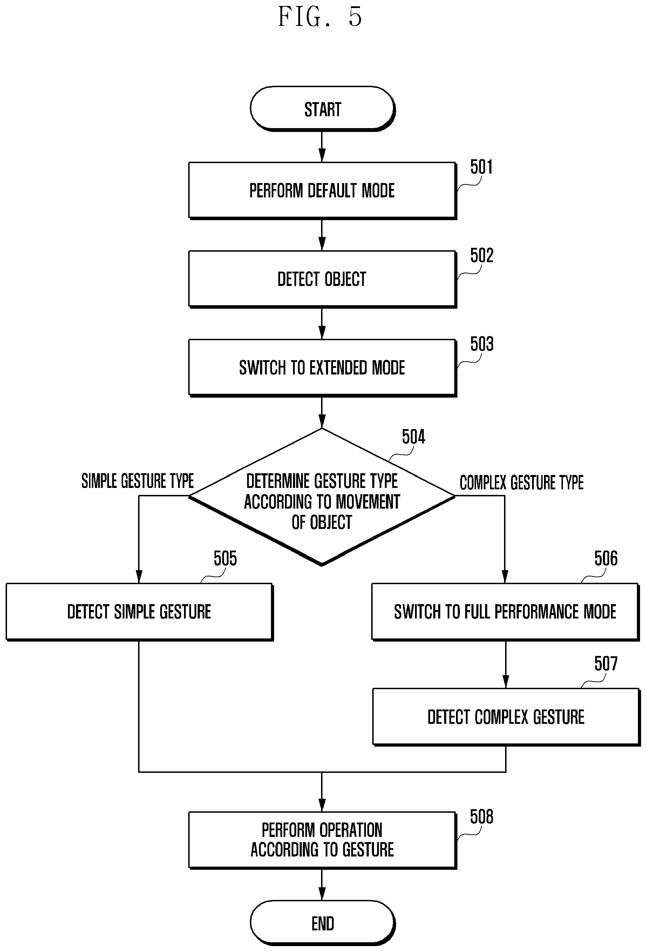

Figure 5 is a flowchart according to various embodiments of the present invention.

With reference to operation 501, the electronic device operates in a default mode.
The default mode may mean a state in which a color camera using an RGB sensor is activated and a depth camera using a depth sensor or an infrared sensor is deactivated. In order to detect an object, the default mode may be a state in which a minimum number of sensors required for detecting the object are activated and, here, the minimum number of sensors may be an RGB sensor as an embodiment.

The electronic device detects an object at operation 502 and switches to an extended mode at operation 503. In order to detect the object, the extended mode may be a mode of activating sensors required for detecting a movement of the object. The extended mode may be a state in which a color camera is activated and a depth camera is activated by activating a depth sensor and/or an emitter of an IR sensor. The extended mode may set the activated depth sensor and/or the IR emitter to operate with a minimum frame rate in order to detect the movement of an object. As an embodiment, the minimum frame rate may be 5 fps requiring minimum power consumption. The rate of 5 fps is not a fixed value, and may differ according to a user setting.

At operation 504, the electronic device operating in the extended mode identifies which type of gesture is intended by the movement of the object by comparing an image of at least one object received from the color camera and/or the depth camera with a pre-stored image. The electronic device may proceed to operation 505, if the movement of object is identified as intending a simple gesture type because the at least one received image corresponds to an image corresponding to a simple gesture among the pre-stored images.

At operation 505, the electronic device detects a simple gesture by maintaining the extended mode. By proceeding to operation 509, the electronic device can perform an operation according to the detected simple gesture.

If the movement of object is identified as intending a complex gesture type at operation 504 because the at least one received image corresponds to an image corresponding to a complex gesture among the pre-stored images, the electronic device operating in the extended mode proceeds to operation 506.

At operation 506, the electronic device switches the currently operating mode from the extended mode to a full performance mode. The full performance mode may be a mode of setting a depth sensor with the highest frame rate value and an IR sensor to emit an IR light with the highest illumination value in order to detect a user's complex gesture.

At operation 507, the electronic device detects a complex gesture. At operation 508, the electronic device performs an operation according to the detected complex gesture.

Although not shown in the drawing, additionally after operation 508, the electronic device can return to operation 501, if no more movement of an object is detected, namely, if no gesture is generated.

According to various embodiments of the present invention, an electronic device may comprise a sensor unit for detecting an object and a movement of the object through at least one sensor; a camera module for photographing the object and the movement of the object through the at least one sensor; and a control unit configured to detect the object, identify the movement of the object, determine the gesture type corresponding to the movement of the object, activate the sensor for detecting the gesture corresponding to the gesture type according to the determined gesture type, and detect the gesture through the activated sensor.

According to various embodiments of the present invention, the control unit may be configured to identify whether the gesture type corresponding to the movement of the object is a simple gesture type or a complex gesture type.

According to various embodiments of the present invention, the electronic device may further comprise a memory configured to store a reference image corresponding to each of the simple gesture type and the complex gesture type. The control unit may be configured to receive at least one image corresponding to the movement of the object, compare the received at least one image with the reference image, and determine the movement of the object as a simple gesture type if one of the reference images is identified as corresponding to an image corresponding to the simple gesture according to the result of comparing.

According to various embodiments of the present invention, the control unit may be configured to determine the movement of the object as a complex gesture type if one of the reference image is identified to correspond to an image corresponding to the complex gesture type according to the result of comparing.

According to various embodiments of the present invention, the control unit may be configured to reset a pre-activated sensor in order to detect the gesture.

According to various embodiments of the present invention, the control unit can set a default mode to detect the object. The default mode may be a mode for activating an RGB sensor and deactivating an infrared (IR) sensor and a depth sensor.

According to various embodiments of the present invention, the control unit may be configured to switch the default mode to an extended mode according to the detection of the object and determine a gesture type according to the movement of the object in the extended mode.

According to various embodiments of the present invention, the extended mode may be a mode for activating the RGB sensor, the IR sensor, and the depth sensor, or a mode for deactivating the RGB sensor, and activating the IR sensor and the depth sensor.

According to various embodiments of the present invention, the extended mode can set the IR sensor and the depth sensor with a frame rate for identifying a gesture type corresponding to the movement of the object.

According to various embodiments of the present invention, the control unit may be configured to maintain the extended mode and activate a sensor for detecting the gesture in the case of a simple gesture type according to the result of determining, and switch the extended mode to a full performance mode and activate a sensor for detecting the gesture in the full performance mode in the case of a complex gesture type according to the result of determining.

According to various embodiments of the present invention, the extended mode can set the IR sensor and the depth sensor with a frame rate for detecting the simple gesture in the case of a simple gesture type according to the result of determining.

According to various embodiments of the present invention, the full performance mode can set the IR sensor and the depth sensor with a frame rate for detecting the complex gesture.

According to various embodiments of the present invention, the full performance mode can set the IR sensor and the depth sensor with a maximum frame rate.

## Claims

1. A gesture sensing method of an electronic device, the method comprising:
detecting an object;
identifying a movement of the object and determining a gesture type corresponding to the movement of the object;
activating a sensor for detecting a gesture corresponding to the gesture type according to the determined gesture type; and
detecting the gesture through the activated sensor.

2. The method of claim 1, wherein identifying a movement comprises determining whether the gesture type corresponding to the movement of the object is a simple gesture type or a complex gesture type.

3. The method of claim 2, wherein identifying a movement comprises:
receiving at least one image corresponding to the movement of the object;
comparing the received at least one image with a pre-stored reference image; and
determining the movement of the object as a simple gesture type if one of the reference images is identified as corresponding to an image corresponding to the simple gesture according to the result of comparing.

4. The method of claim 3, further comprising determining the movement of the object as a complex gesture type, if one of the reference images corresponds to the complex gesture type according to the result of comparing.

5. The method of claim 1, wherein activating a sensor comprises resetting a pre-activated sensor for detecting the gesture.

6. The method of claim 1, wherein detecting the object comprises detecting the object in a default mode,
wherein the default mode is a mode for activating an RGB sensor, and deactivating an infrared (IR) sensor and a depth sensor.

7. The method of claim 6, wherein identifying a movement of the object comprises:
switching from the default mode to an extended mode according to detection of the object, and
determining a gesture type corresponding to the object in the extended mode.

8. The method of claim 7, wherein the extended mode is a mode for activating the RGB sensor, the IR sensor, and the depth sensor, or
a mode for deactivating the RGB sensor, and activating the IR sensor and the depth sensor.

9. The method of claim 8, wherein the extended mode sets the IR sensor and the depth sensor with a frame rate for identifying a gesture type corresponding to the movement of the object.

10. The method of claim 7, wherein the extended mode is maintained and a sensor for detecting a simple gesture corresponding to the simple gesture is activated in the case of the simple gesture type according to the result of determining, and
the extended mode is switched to a full performance mode and a sensor for detecting a complex gesture corresponding to the gesture type is activated in the full performance mode in the case of the complex gesture type according to the result of determining.

11. The method of claim 10, wherein the extended mode sets the IR sensor and the depth sensor with a frame rate for detecting the simple gesture in the case of the simple gesture type according to the result of determining.

12. The method of claim 10, wherein the full performance mode sets the IR sensor and the depth sensor with a frame rate for detecting the complex gesture.

13. The method of claim 10, wherein the full performance mode sets the IR sensor and the depth sensor with a maximum frame rate.

14. An electronic device comprising:
a sensor unit for detecting an object and a movement of the object through at least one sensor;
a camera module for photographing the object and the movement of the object through the at least one sensor; and
a control unit configured to detect the object, identify the movement of the object, determine the gesture type corresponding to the movement of the object, activate the sensor for detecting the gesture corresponding to the gesture type according to the determined gesture type, and detect the gesture through the activated sensor.

15. The electronic device of claim 14, wherein the control unit is configured to identify whether the gesture type corresponding to the movement of the object is a simple gesture type or a complex gesture type.

16. The electronic device of claim 15, further comprising a memory configured to store a reference image corresponding to each of the simple gesture type and the complex gesture type,
wherein the control unit is configured to receive at least one image corresponding to the movement of the object, compare the received at least one image with the reference image, and determine the movement of the object as a simple gesture type if one of the reference images is identified as corresponding to an image corresponding to the simple gesture according to the result of comparing.

17. The electronic device of claim 16, wherein the control unit is configured to determine the movement of the object as a complex gesture type if one of the reference images is identified as corresponding to an image corresponding to the complex gesture type according to the result of comparing.

18. The electronic device of claim 14, wherein the control unit is configured to reset a pre-activated sensor in order to detect the gesture.

19. The electronic device of claim 14, wherein the control unit sets a default mode to detect the object,
wherein the default mode is a mode for activating an RGB sensor and deactivating an infrared (IR) sensor and a depth sensor.

20. The electronic device of claim 19, wherein the control unit is configured to switch the default mode to an extended mode according to the detection of the object, and
determine a gesture type according to the movement of the object in the extended mode.

21. The electronic device of claim 20, wherein the extended mode is a mode for activating the RGB sensor, the IR sensor, and the depth sensor, or
a mode for deactivating the RGB sensor, and activating the IR sensor and the depth sensor.

22. The electronic device of claim 21, wherein the extended mode sets the IR sensor and the depth sensor with a frame rate for identifying a gesture type corresponding to the movement of the object.

23. The electronic device of claim 20, wherein the control unit is configured to maintain the extended mode and activate a sensor for detecting the gesture in the case of the simple gesture type according to the result of determining, and
switch the extended mode to a full performance mode and activate a sensor for detecting the gesture in the full performance mode in the case of the complex gesture type according to the result of determining.

24. The electronic device of claim 23, wherein the extended mode sets the IR sensor and the depth sensor with a frame rate for detecting the simple gesture in the case of the simple gesture type according to the result of determining.

25. The electronic device of claim 23, wherein the full performance mode sets the IR sensor and the depth sensor with a frame rate for detecting the complex gesture.

26. The electronic device of claim 23, wherein the full performance mode sets the IR sensor and the depth sensor with a maximum frame rate.
